# EUROPÄISCHE PATENTSCHRIFT

(11) **EP 1 797 292 B1**
(45) Veröffentlichungstag und Bekanntmachung des Hinweises auf die Patenterteilung: **09.07.2008**
(21) Anmeldenummer: 05856215.8
(22) Anmeldetag: 07.07.2005
(51) Int. Cl.: F01N 3/36, F01N 3/20

(54) **DOSIERVORRICHTUNG UND BRENNKRAFTMASCHINE MIT DOSIERVORRICHTUNG**
DOSING DEVICE, AND INTERNAL COMBUSTION ENGINE COMPRISING A DOSING DEVICE
DISPOSITIF DE DOSAGE ET MOTEUR A COMBUSTION INTERNE EQUIPE DE CE DISPOSITIF DE DOSAGE

(30) Priorität: 28.09.2004 DE 102004046879
(43) Veröffentlichungstag der Anmeldung: 20.06.2007
(73) Patentinhaber: ROBERT BOSCH GMBH, 70442 Stuttgart (DE)
(72) Erfinder: BUERGLIN, Markus, 71254 Ditzingen (DE); HEILIG, Dirk, 71254 Ditzingen (DE)
(86) Internationale Anmeldenummer: PCT/EP2005/053247
(87) Internationale Veröffentlichungsnummer: WO 2006/084508

(56) Entgegenhaltungen:
- WO-A-03/084647
- DE-A1- 10 140 988
- US-A- 5 605 042
- US-B1- 6 513 323
- PATENT ABSTRACTS OF JAPAN Bd. 1997, Nr. 08, 29. August 1997 (1997-08-29) & JP 09 096212 A (MITSUBISHI MOTORS CORP), 8. April 1997 (1997-04-08)

## Beschreibung

### Stand der Technik

Die vorliegende Erfindung betrifft eine Dosiervorrichtung zum Einbringen eines Betriebsmittels insbesondere in einen Abgastrakt einer Brennkraftmaschine, mit einem Kühlsystem zum Kühlen insbesondere eines Injektormoduls der Dosiervorrichtung, wobei das Kühlsystem einen Kühlkreislauf mit einem Kühlfluid und mit mindestens einer Wärme aus dem Kühlkreislauf abführenden Kühlvorrichtung aufweist.

Die vorliegende Erfindung betrifft ferner eine Brennkraftmaschine mit einer derartigen Dosiervorrichtung.

Aus der JP 09 096212 ist es bekannt, einen Reduktionsmittelinjektor mittels eines Kühlwasserkreislaüfs zu kühlen.

Aus der US 5,605,042 ist es bekannt, eine Ventilanordnung mit einer Kühlwassermanschette zu versehen.

Solche Dosiervorrichtungen werden beispielsweise dazu eingesetzt, um Betriebsmittel wie z.B. eine als Reduktionsmittelvorläufer verwendete wässrige Harnstofflösung in einen Abgastrakt einer Brennkraftmaschine einzubringen. Nach dem Einbringen ins Abgas reagiert die Harnstofflösung zu Ammoniak. Der Ammoniak wiederum reagiert selektiv an einem sogenannten SCR (Selective Catalytic Reduction)-Katalysator mit in dem Abgas der Brennkraftmaschine enthaltenen Stickoxiden zu molekularem Stickstoff und Wasser, wodurch eine Entstickung insbesondere von dieselmotorischen Abgasen möglich ist.

Um eine sichere Funktion eines den heißen Abgasen der Brennkraftmaschine ausgesetzten Injektormoduls der Dosiervorrichtung zu gewährleisten, ist eine zuverlässige Kühlung des Injektormoduls erforderlich. Üblicherweise bedarf auch das Betriebsmittel wie z.B. die wässrige Harnstofflösung einer Kühlung, um sich unter Einwirkung der hohen Temperaturen aus dem Abgastrakt nicht zu zersetzen bzw. unbrauchbar zu werden.

Hierzu ist im Stand der Technik eine Kühlung durch das Betriebsmittel selbst, d.h. z.B. durch die Harnstofflösung, vorgeschlagen. Angesichts eines verhältnismäßig hohen Gefrierpunkts des Betriebsmittels, der im Falle der wässrigen Harnstofflösung beispielsweise bei etwa -11°C liegt, ist eine derartige Kühlung insbesondere im Winter nicht brauchbar, da das Betriebsmittel einfrieren kann und eine Kühlung des Injektormoduls in diesem Zustand nicht möglich ist.

Um dennoch einen zuverlässigen Betrieb der Brennkraftmaschine und eine rasche Einbringung des Betriebsmittels auch bei Minusgraden zu ermöglichen, sind die oben beschriebenen herkömmlichen Systeme mit wärmeisolierten, beheizten Leitungen für das Betriebsmittel vorgesehen, welche erhöhte Herstellungskosten der Dosiervorrichtung bedingen. Die Wärmeisolation der Leitungen erschwert darüberhinaus bei einem Betrieb der Brennkraftmaschine, bei dem das Injektormodul durch heiße Abgase erhitzt wird, das Kühlen des Injektormoduls.

Demgemäß ist es Aufgabe der vorliegenden Erfindung, eine verbesserte Dosiervorrichtung und eine Brennkraftmaschine mit einer verbesserten Dosiervorrichtung anzugeben, bei der insbesondere eine einfache und gleichzeitig zuverlässige Kühlung insbesondere eines Injektormoduls möglich ist.

Diese Aufgabe wird bei der vorstehend beschriebenen Dosiervorrichtung erfindungsgemäß durch den Merkmalen von Anspruch 1 gelöst.

### Vorteile der Erfindung

Durch die erfindungsgemäße Anordnung des Kühlkreislaufs ist im Bereich der Kühlvorrichtung sichergestellt, dass von der Kühlvorrichtung abgekühltes Kühlfluid aufgrund seiner im Vergleich zu nicht abgekühltem Kühlfluid höheren Dichte aufgrund der Schwerkraft nach unten absinkt. Durch diese Konvektionsströmung wird oberhalb der Kühlvorrichtung befindliches, noch nicht abgekühltes Kühlfluid zur Kühlvorrichtung befördert, um dort ebenfalls abgekühlt zu werden.

Eine derartige Konvektionsströmung ergibt sich auch durch eine Anordnung eines zweiten Teils des Kühlkreislaufs oberhalb einer den Kühlkreislauf erwärmenden Stelle. Das an dieser Stelle erwärmte Kühlfluid weist eine geringere Dichte als das z.B. von unten an die erwärmende Stelle nachströmende Kühlfluid auf, und steigt dementsprechend nach oben, wobei kühleres Kühlfluid an die den Kühlkreislauf erwärmende Stelle nachströmt.

Durch eine Kombination der beiden vorstehend genannten Anordnungen im ersten und zweiten Teil des Kühlkreislaufs kann eine sichere Strömung bzw. Zirkulation des Kühlfluids im Kühlkreislauf erreicht werden, so dass eine Umwälzpumpe zur Erzeugung eines permanenten Kühlfluidstroms im Kühlkreislauf der erfindungsgemäßen Dosiervorrichtung nicht mehr erforderlich ist.

Je nach Dimensionierung des Kühlkreislaufs ist es auch möglich, eine Zirkulation des Kühlfluids mit nur einem erfindungsgemäß ausgebildeten Teil des Kühlkreislaufs zu erreichen.

Gemäß einer sehr vorteilhaften Ausführungsform der erfindungsgemäßen Dosiervorrichtung ist der erste Teil des Kühlkreislaufs direkt mit der Kühlvorrichtung verbunden. Dadurch ergibt sich eine besonders gute Konvektion im Bereich des ersten Teils des Kühlkreislaufs und eine dementsprechend gute Zirkulation des Kühlfluids im Kühlkreislauf.

Eine weitere sehr vorteilhafte Ausführungsform der erfindungsgemäßen Dosiervorrichtung ist dadurch gekennzeichnet, dass der zweite Teil des Kühlkreislaufs direkt mit der den Kühlkreislauf erwärmenden Stelle, insbesondere direkt mit dem Injektormodul, verbunden ist, wodurch sich ebenfalls die gewünschte Konvektion vorteilhaft einstellt.

Einer weiteren Ausführungsform der vorliegenden Erfindung zufolge erstreckt sich der erste Teil des Kühlkreislaufs um mindestens eine erste Höhendifferenz unterhalb der Kühlvorrichtung, so dass in diesem ersten Teil ein hinreichend großes Volumen innerhalb des Kühlkreislaufs bereitsteht, in welches sich das abgekühlte, absinkende Kühlfluid ausbreiten kann.

Gemäß einer weiteren sehr vorteilhaften Ausführungsform der erfindungsgemäßen Dosiervorrichtung erstreckt sich der zweite Teil des Kühlkreislaufs um mindestens eine zweite Höhendifferenz oberhalb der den Kühlkreislauf erwärmenden Stelle. Auch hierdurch ist gewährleistet, dass eine hinreichende Konvektion durch ein ungehindertes Aufsteigen von erwärmtem Kühlfluid direkt an der den Kühlkreislauf erwärmenden Stelle stattfinden kann.

Gemäß einer anderen sehr vorteilhaften Variante der Erfindung weist die Kühlvorrichtung Kühlrippen auf einer den Kühlkreislauf beinhaltenden Rohrleitung und/oder mehrere Rohleitungen und/oder wärmeleitendes Geflecht oder dergleichen auf.

Eine andere sehr vorteilhafte Ausführungsform der erfindungsgemäßen Dosiervorrichtung sieht vor, dass die Kühlvorrichtung so in einem Kraftfahrzeug angeordnet ist, dass sie zumindest teilweise von einem Fahrtwind umströmbar ist. Auf diese Weise ist stets für eine ausreichende Wärmeabfuhr von der Kühlvorrichtung und damit von dem gesamten Kühlkreislauf gesorgt.

Ganz besonders vorteilhaft ist bei einer weiteren Variante der erfindungsgemäßen Dosiervorrichtung vorgesehen, dass Leitbleche verwendet werden, um der Kühlvorrichtung Fahrtwind zuzuleiten und/oder die Kühlvorrichtung von insbesondere durch eine Brennkraftmaschine erwärmter Luft abzuschirmen, so dass eine noch wirksamere Kühlung des Kühlfluids durch die Kühlvorrichtung gegeben ist.

Als eine weitere Lösung der Aufgabe der vorliegenden Erfindung ist eine Brennkraftmaschine gemäß Anspruch 9 angegeben.

Eine sehr vorteilhafte Variante der erfindungsgemäßen Brennkraftmaschine weist eine Dosiervorrichtung gemäß den Ansprüchen 2 bis 8 auf.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind.

Zeichnung
- Figur 1: zeigt schematisch eine Ausführungsform der erfindungsgemäßen Dosiervorrichtung, und
- Figur 2: zeigt schematisch eine Ausführungsform der erfindungsgemäßen Brennkraftmaschine.

### Beschreibung der Ausführungsbeispiele

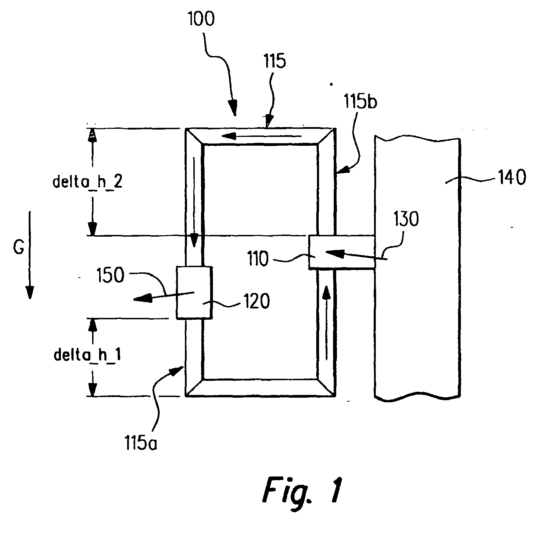

Die in Figur 1 dargestellte Dosiervorrichtung 100 weist einen Kühlkreislauf 115 auf, der zum Abtransport von Wärme vorgesehen ist, die dem Kühlkreislauf 115 von einem im Abgasrohr 140 strömenden Abgas (nicht gezeigt) zugeführt wird. Wie durch den Pfeil 130 in Figur 1 symbolisiert, wird hierbei ein in das Abgasrohr 140 hineinragendes Injektormodul 110 von dem Abgas erwärmt, und das Injektormodul 110 erwärmt wiederum ein in dem Kühlkreislauf 115 vorgesehenes Kühlfluid. Hierdurch ist gleichzeitig eine Kühlung des Injektormoduls 110 durch den Kühlkreislauf 115 gegeben.

Das Injektormodul 110 ist zur Einbringung eines Betriebsmittels wie z.B. eines Reduktionsmittelvorläufers in den Abgastrakt 140 vorgesehen. Bei dem Reduktionsmittelvorläufer kann es sich beispielsweise um eine wässrige Harnstofflösung handeln. Eine Zuführung des Betriebsmittels zu dem Injektormoduls 110 ist nicht in Figur 1 dargestellt.

Das Kühlfluid, bei dem es sich beispielsweise um ein handelsübliches Wasser-Glykol-Gemisch handelt, weist vorzugsweise einen niedrigeren Gefrierpunkt auf als das Betriebsmittel, so dass auch z.B. bei winterlichen Bedingungen eine sichere Zirkulation des Kühlfluids im Kühlkreislauf 115 gegeben ist.

Dadurch wird der Nachteil herkömmlicher Dosiervorrichtungen vermieden, welche eine Kühlung des Injektormoduls 110 durch das Betriebsmittel selbst vorsehen, und die aufgrund eines verhältnismäßig hohen Gefrierpunkts des Betriebsmittels, der im Falle einer wässrigen Harnstofflösung etwa bei -11°C liegt, bei kalter Witterung nicht mehr funktionieren. Bei diesen herkömmlichen Vorrichtungen wird zwar das unmittelbar um das vom Abgas erwärmte Injektormodul 110 befindliche ggf. gefrorene Betriebsmittel aufgetaut, eine Zirkulation desselben in einem Kühlkreislauf und damit eine wirksame Kühlung insbesondere des Injektormoduls 110 ist jedoch nicht möglich.

Bei der erfindungsgemäßen Dosiervorrichtung 100 stellt sich dieses Problem aufgrund des einen niedrigen Gefrierpunkt aufweisenden Kühlfluids nicht, so dass stets eine zuverlässige Zirkulation des Kühlfluids und damit eine wirksame Kühlung möglich ist.

Wie durch den Pfeil 150 in Figur 1 symbolisiert, dient eine Kühlvorrichtung 120 dazu, Wärme von dem Kühlkreislauf 115 bzw. dem Kühlfluid an die Umgebung abzugeben.

Hierzu ist die Kühlvorrichtung 120 vorteilhaft mit nicht in Figur 1 dargestellten Kühlrippen und dergleichen ausgestattet.

Bei einer Ausgestaltung der Kühlvorrichtung 120 als Rohrleitung können diese Kühlrippen direkt auf der Oberfläche der Rohrleitung angebracht sein. Es ist auch möglich, die Kühlvorrichtung 120 durch mehrere parallel verlaufende Rohrleitungen und/oder diese verbindendes, wärmeleitendes Geflecht auszubilden.

Wie in Figur 1 dargestellt, ist ein erster Teil 115a des Kühlkreislaufs 115 direkt unterhalb der Kühlvorrichtung 120, angeordnet und erstreckt sich um eine erste Höhendifferenz delta_h_1 unterhalb der Kühlvorrichtung 120. Auf diese Weise ist es möglich, dass durch die Kühlvorrichtung 120 abgekühltes Kühlfluid aufgrund seiner höheren Dichte in den ersten Teil 115a des Kühlkreislaufs 115 direkt nach unten absinken kann. Der in Figur 1 nach unten deutende und mit G bezeichnete Pfeil symbolisiert hierbei eine Richtung der u.a. auf das Kühlfluid wirkenden Gewichtskraft G.

Durch die in Figur 1 innerhalb des ersten Teils 115a des Kühlkreislaufs 115 nach unten erfolgende Konvektionsströmung des von der Kühlvorrichtung 120 abgekühlten Kühlfluids ergibt sich im linken oberen Bereich des Kühlkreislaufs 115 eine Sogwirkung für oberhalb der Kühlvorrichtung 120 befindliche Anteile des Kühlfluids, so dass diese zu der Kühlvorrichtung 120 strömen und dort ebenfalls abgekühlt werden.

Aufgrund dieser Konvektionsströmung ergibt sich erfindungsgemäß eine Zirkulation des Kühlfluids im Kühlkreislauf 115, so dass eine wirksame Kühlung des Injektormoduls 110 sichergestellt ist. Eine Umwälzpumpe oder dergleichen ist bei der erfindungsgemäßen Dosiervorrichtung für das Kühlsystem daher nicht erforderlich.

Darüber hinaus ist im rechten oberen Bereich (Figur 1) des Kühlkreislaufs 115 ein zweiter Teil 115b vorgesehen, der direkt über dem Injektormodul 110 angeordnet ist und eine zweite Höhendifferenz delta_h_2 aufweist, wobei das Injektormodul 110 von durch das Abgasrohr 140 strömendem Abgas erhitzt wird und damit auch das Kühlfluid im Kühlkreislauf 115 erwärmt.

Das auf diese Weise erwärmte Kühlfluid steigt aufgrund seiner geringeren Dichte entgegen der Gewichtskraft G vom Injektormodul 110 aus gesehen nach oben und bewirkt damit ein Nachströmen von kühlerem Kühlfluid aus einem unterhalb des Injektormoduls 110 befindlichen Bereich des Kühlkreislaufs 115 zu dem Injektormodul 110.

Somit ist ohne Verwendung einer Umwälzpumpe allein aufgrund der Konvektion durch die erfindungsgemäße Anordnung des ersten Teils 115a und des zweiten Teils 115b des Kühlkreislaufs 115 eine zuverlässige Kühlung des Injektormoduls 110 oder auch anderer Komponenten (nicht gezeigt) gegeben.

Für einen sicheren Betrieb des Kühlsystems ist eine ausreichende Dimensionierung der Höhendifferenzen delta_h_1, delta_h_2 derart erforderlich, dass die im Bereich des ersten Teils 115a und des zweiten Teils 115b auftretende Konvektionsströmung des Kühlfluids ausreicht, um das in den weiteren Abschnitten des Kühlkreislaufs 115 vorhandene Kühlfluid zur Zirkulation anzuregen.

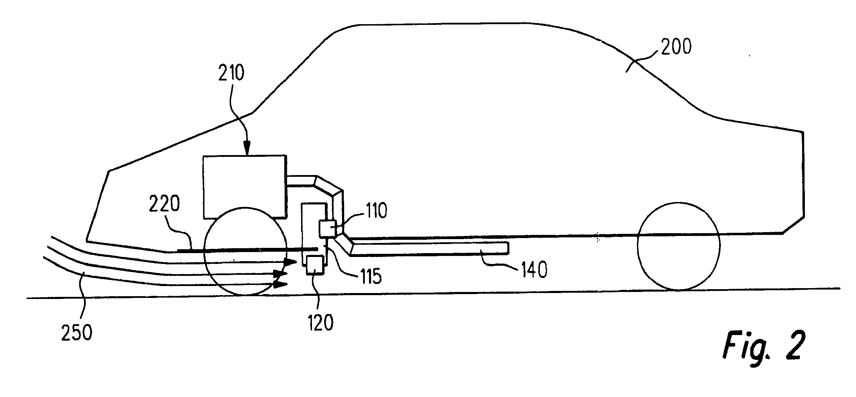

In Figur 2 ist eine Ausführungsform der erfindungsgemäßen Dosiervorrichtung in einer möglichen Einbaulage an dem Abgasrohr 140 der Brennkraftmaschine 210 dargestellt. Wie aus Figur 2 ersichtlich, ist zwischen der Brennkraftmaschine 210 und der Kühlvorrichtung 120 ein Leitblech 220 vorgesehen, das einerseits den durch die von links nach rechts deutenden Pfeile 250 symbolisierten Fahrtwind zur Kühlvorrichtung 120 leitet und auf diese Weise zu deren Abkühlung beiträgt. Andererseits schirmt das Leitblech 220 die Kühlvorrichtung 120 vor erwärmter Luft (nicht gezeigt) ab, welche beispielsweise im Bereich der Brennkraftmaschine 210 entsteht und eine Funktion der Kühlvorrichtung 120 beeinträchtigen könnte.

Damit ist im Betrieb des Fahrzeugs 200, das heißt insbesondere in demjenigen Zustand, in dem das Injektormodul 110 auch durch die Abgase der Brennkraftmaschine 210 aufgeheizt wird, eine besonders gute Kühlung der Kühlvorrichtung 120 durch den Fahrtwind 250 gegeben.

Auf diese Weise stellt sich die vorstehend beschriebene Konvektion des Kühlfluids ein und ermöglicht eine zuverlässige Kühlung des Injektormoduls 110 ohne z.B. eine separate Umwälzpumpe, wie sie bei bekannten Kühlkreisläufen erforderlich ist.

Ein weiterer Vorteil gegenüber einem herkömmlichen Kühlsystem, bei dem zur Kühlung das Betriebsmittel selbst verwendet wird, besteht darin, dass bei dem Kühlsystem der erfindungsgemäßen Dosiervorrichtung 100 (Fig. 1) kein Wärmeeintrag in einen Vorratsbehälter des Betriebsmittels erfolgt, weil der Kühlkreislauf 115 ein separates Kühlfluid aufweist und von einem Betriebsmittelkreislauf (nicht gezeigt) getrennt ist. Der bei den herkömmlichen Systemen erforderliche Rücklauf für aus dem Kühlkreislauf in einen Vorratsbehälter rückströmendes Betriebsmittel ist bei der erfindungsgemäßen Dosiervorrichtung 100 ebenfalls nicht erforderlich.

## Patentansprüche

1. Dosiervorrichtung (100) zum Einbringen eines Betriebsmittels insbesondere in einen. Abgastrakt (140) einer Brennkraftmaschine (210), mit einem Kühlsystem zum Kühlen insbesondere eines Injektormoduls (110) der Dosiervorrichtung (100), wobei das Kühlsystem einen Kühlkreislauf (115) mit einem Kühlfluid und mit mindestens einer Wärme aus dem Kühlkreislauf (115) abführenden Kühlvorrichtung (120) aufweist, **dadurch gekennzeichnet, dass** ein erster Teil (115a) des Kühlkreislaufs (115) zumindest teilweise unterhalb der Kühlvorrichtung (120) angeordnet ist und/oder dass ein zweiter Teil (115b) des Kühlkreislaufs (115) zumindest teilweise oberhalb einer den Kühlkreislauf (115) erwärmenden Stelle, insbesondere oberhalb des Injektormoduls (110), angeordnet ist, so dass sich allein aufgrund einer Konvektionsströmung des Kühlfluids eine Zirkulation des Kühlfluids im Kühlkreislauf (115) dergestalt ergibt, dass der erste Teil (115a) des Kühlkreislaufs ausschließlich zur Hinführung des Kühlfluids zur erwärmenden Stelle und der zweite Teil (115b) des Kühlkreislaufs ausschließlich zur Hinführung des Kühlfluids zur Kühlvorrichtung (120) dient.

2. Dosiervorrichtung (100) nach Anspruch 1, **dadurch gekennzeichnet, dass** der erste Teil (115a) des Kühlkreislaufs (115) direkt mit der Kühlvorrichtung (120) verbunden ist.

3. Dosiervorrichtung (100) nach Anspruch 1 oder 2, **dadurch gekennzeichnet, dass** der zweite Teil (115b) des Kühlkreislaufs (115) direkt mit der den Kühlkreislauf (115) erwärmenden Stelle, insbesondere direkt mit dem Injektormodul (110) verbunden ist.

4. Dosiervorrichtung (100) nach einem der vorstehenden Ansprüche, **dadurch gekennzeichnet, dass** sich der erste Teil (115a) des Kühlkreislaufs (115) um mindestens eine erste Höhendifferenz (delta_h_1) unterhalb der Kühlvorrichtung (120) erstreckt.

5. Dosiervorrichtung (100) nach einem der vorstehenden Ansprüche, **dadurch gekennzeichnet, dass** sich der zweite Teil (115b) des Kühlkreislaufs (115) um mindestens eine zweite Höhendifferenz (delta_h_2) oberhalb der den Kühlkreislauf (115) erwärmenden Stelle erstreckt.

6. Dosiervorrichtung (100) nach einem der vorstehenden Ansprüche, **dadurch gekennzeichnet, dass** die Kühlvorrichtung (120) Kühlrippen auf einer den Kühlkreislauf (115) beinhaltenden Rohrleitung und/oder mehrere Rohrleitungen und/oder wärmeleitendes Geflecht oder dergleichen aufweist.

7. Dosiervorrichtung (100) nach einem der vorstehenden Ansprüche, **dadurch gekennzeichnet, dass** die Kühlvorrichtung (120) so in einem Kraftfahrzeug (200) angeordnet ist, dass sie zumindest teilweise von einem Fahrtwind umströmbar ist.

8. Dosiervorrichtung (100) nach einem der vorstehenden Ansprüche, **dadurch gekennzeichnet, dass** Leitbleche (220) vorgesehen sind, um der Kühlvorrichtung (120) Fahrtwind zuzuleiten und/oder die Kühlvorrichtung (120) von insbesondere durch eine Brennkraftmaschine (210) erwärmter Luft abzuschirmen.

9. Brennkraftmaschine (210) mit einer Dosiervorrichtung nach einem der vorhergehenden Ansprüche.

## Claims

1. Metering device (100) for introducing an operating medium in particular into an exhaust tract (140) of an internal combustion engine (210), having a cooling system for cooling in particular an injector module (110) of the metering device (100), with the cooling system having a cooling circuit (115) with a cooling fluid and with at least one cooling device (120) which dissipates heat from the cooling circuit (115), **characterized in that** a first part (115a) of the cooling circuit (115) is arranged at least partially below the cooling device (120) and/or **in that** a second part (115b) of the cooling circuit (115) is arranged at least partially above a point which heats the cooling circuit (115), in particular above the injector module (110), such that a circulation of the cooling fluid in the cooling circuit (115) is generated solely on account of a convectional flow of the cooling fluid, in such a way that the first part (115a) of the cooling circuit serves exclusively for conducting the cooling fluid to the heating point and the second part (115b) of the cooling circuit serves exclusively for conducting the cooling fluid to the cooling device (120).

2. Metering device (100) according to Claim 1, **characterized in that** the first part (115a) of the cooling circuit (115) is directly connected to the cooling device (120).

3. Metering device (100) according to Claim 1 or 2, **characterized in that** the second part (115b) of the cooling circuit (115) is connected directly to the point which heats the cooling circuit (115), in particular directly to the injector module (110).

4. Metering device (100) according to one of the preceding claims, **characterized in that** the first part (115a) of the cooling circuit (115) extends by at least a first height difference (delta_h_1) below the cooling device (120).

5. Metering device (100) according to one of the preceding claims, **characterized in that** the second part (115b) of the cooling circuit (115) extends by at least a second height difference (delta_h_2) above the point which heats the cooling circuit (115).

6. Metering device (100) according to one of the preceding claims, **characterized in that** the cooling device (120) has cooling fins on a tube line which contains the cooling circuit (115) and/or a plurality of tube lines and/or heat-conducting mesh or the like.

7. Metering device (100) according to one of the preceding claims, **characterized in that** the cooling device (120) is arranged in a motor vehicle (200) in such a way that relative wind can flow at least partially around said cooling device (120).

8. Metering device (100) according to one of the preceding claims, **characterized in that** guide plates (220) are provided in order to conduct relative wind to the cooling device (120) and/or to shield the cooling device (120) from air heated in particular by an internal combustion engine (210).

9. Internal combustion engine (210) having a metering device according to one of the preceding claims.

## Revendications

1. Dispositif de dosage (100) pour introduire un moyen de fonctionnement notamment dans la conduite des gaz d'échappement (140) d'un moteur à combustion interne (210) équipé d'un système de refroidissement pour refroidir notamment un module d'injecteur (110) du dispositif de dosage (100),
le système de refroidissement comportant un circuit de refroidissement (115) avec un fluide de refroidissement et au moins un dispositif de refroidissement (120) pour évacuer la chaleur du circuit de refroidissement (115),
**caractérisé en ce qu'**
une première partie (115a) du circuit de refroidissement (115) se trouve au moins en partie sous le dispositif de refroidissement (120) et/ou
une seconde partie (115b) du circuit de refroidissement (115) se trouve au moins en partie au-dessus d'un point réchauffant le circuit de refroidissement (115), notamment au-dessus du module d'injecteur (110) de façon que le seul courant de convexion du fluide de refroidissement mette en circulation le fluide de refroidissement dans le circuit de refroidissement (115),
la première partie (115a) du circuit de refroidissement sert exclusivement à alimenter le point chaud avec le fluide de refroidissement et la seconde partie (115b) du circuit de refroidissement sert exclusivement le dispositif de refroidissement (120) en fluide de refroidissement.

2. Dispositif de dosage (100) selon la revendication 1,
**caractérisé en ce que**
la première partie (115a) du circuit de refroidissement (115) est reliée directement au dispositif de refroidissement (120).

3. Dispositif de dosage (100) selon la revendication 1 ou 2,
**caractérisé en ce que**
la seconde partie (115b) du circuit de refroidissement (115) est reliée directement au point chaud du circuit de refroidissement (115), notamment directement au module d'injecteur (110).

4. Dispositif de dosage (100) selon l'une des revendications précédentes,
**caractérisé en ce que**
la première partie (115a) du circuit de refroidissement (115) se situe en dessous du dispositif de refroidissement (120) au moins avec une première différence de hauteur (delta-h-1).

5. Dispositif de dosage (100) selon l'une des revendications précédentes,
**caractérisé en ce que**
la seconde partie (115b) du circuit de refroidissement (115) se situe au moins avec une seconde différence de hauteur (delta-h-2) au-dessus du coin chaud du circuit de refroidissement (115).

6. Dispositif de dosage (100) selon l'une des revendications précédentes,
**caractérisé en ce que**
le dispositif de refroidissement (120) comporte des ailettes de refroidissement sur une conduite faisant partie du circuit de refroidissement (115) et/ou plusieurs conduites et/ou un tissu thermoconducteur ou un moyen analogue.

7. Dispositif de dosage (100) selon l'une des revendications précédentes,
**caractérisé en ce que**
le dispositif de refroidissement (120) est installé dans le véhicule automobile (200) pour être balayé au moins en partie par le vent de circulation.

8. Dispositif de dosage (100) selon l'une quelconque des revendications précédentes,
**caractérisé par**
des tôles de guidage (220) pour diriger le vent de circulation autour du dispositif de refroidissement (120) et/ou pour protéger le dispositif de refroidissement (120), notamment de l'air réchauffé par le moteur à combustion interne (210).

9. Moteur à combustion interne (210) équipé d'un dispositif de dosage selon l'une des revendications précédentes.
